# FASCICULE DE BREVET EUROPEEN

(11) **EP 3 661 774 B1**
(45) Date de publication et mention de la délivrance du brevet: **05.10.2022**
(21) Numéro de dépôt: 18758945.2
(22) Date de dépôt: 01.08.2018
(51) Int. Cl.: B60G 21/055

(54) **PROCÉDÉ DE FABRICATION D'UN ENSEMBLE STABILISATEUR POUR VÉHICULE**
HERSTELLUNGSVERFAHREN FÜR EINE STABILISATORANORDNUNG FÜR EIN FAHRZEUG
METHOD OF MANUFACTURING OF A STABILISER ASSEMBLY FOR A VEHICLE

(30) Priorité: 02.08.2017 FR 1757412
(43) Date de publication de la demande: 10.06.2020
(73) Titulaire: Sogefi Suspensions, 78280 Guyancourt (FR)
(72) Inventeur: BOUDIER, Pascal, 55170 Cousances-les-Forges (FR); ACHTIOUI, Touria, 59500 Douai (FR); RHEIN, Jacky, 91330 Yerres (FR); VILLETTE, Maud, 62490 Vitry En Artois (FR)
(74) Mandataire: Cabinet Beau de Loménie
(86) Numéro de dépôt international: PCT/FR2018/051977
(87) Numéro de publication internationale: WO 2019/025726

(56) Documents cités:
- EP-A1- 3 326 846
- EP-A2- 1 124 076
- WO-A1-2010/149756
- WO-A1-2012/038659
- DE-A1-102012 208 156
- DE-A1-102014 217 839
- DE-B3-102015 008 952
- DE-U1-202016 100 149
- US-A- 5 588 209

## Description

### DOMAINE DE L'INVENTION

Le présent exposé concerne un procédé de fabrication d'un ensemble stabilisateur pour véhicule.

Un tel ensemble stabilisateur peut convenir pour tout type de barre stabilisatrice et tout type de véhicule, afin de limiter le roulis du véhicule. En particulier, un tel ensemble stabilisateur peut être utilisé pour n'importe quel essieu du véhicule.

### ETAT DE LA TECHNIQUE ANTERIEURE

Dans un véhicule à essieux, les deux roues d'un même essieu sont généralement reliées par une barre stabilisatrice. Une telle barre stabilisatrice, également appelée barre anti-dévers ou anti-roulis, est un élément de suspension du véhicule qui forme un ressort tendant à solidariser les deux roues d'un même essieu. Une telle barre stabilisatrice permet ainsi de limiter le roulis lors des virages et de réduire les déformations subies par la suspension de manière à maintenir le plus possible les pneus à plat sur le sol et donc à conserver une adhérence maximale.

Chaque extrémité d'une barre stabilisatrice est ainsi fixée au triangle de suspension d'une roue, par l'intermédiaire de biellettes rotulées, tandis que la partie centrale de la barre stabilisatrice est fixée au châssis du véhicule par l'intermédiaire d'au moins deux paliers.

Ces paliers doivent permettre la fixation de la barre stabilisatrice sur le châssis du véhicule tout en assurant une certaine souplesse, la barre stabilisatrice devant pouvoir légèrement bouger par rapport au châssis.

Pour cette raison, les paliers comprennent classiquement une bride métallique et une bague élastique interposée entre la barre stabilisatrice et la bride métallique. Cette bague élastique, le plus souvent en élastomère, est ainsi généralement mise en place autour de la barre stabilisatrice puis enserrée par la bride qui la bloque alors par compression.

Toutefois, de telles brides métalliques sont assez lourdes et relativement couteuses. De plus, dans certaines configurations connues, la barre stabilisatrice peut glisser par rapport aux paliers, ce qui génère du bruit indésirable. Des brides en matériau plastique sont également connues des documents DE 10 2014 217 839 et DE 20 2016 100 149 tandis qu'un procédé d'assemblage de barre stabilisatrice est connu du document US 5 588 209.

Il existe donc un réel besoin pour un procédé de fabrication d'un ensemble stabilisateur qui soit dépourvu, au moins en partie, des inconvénients inhérents aux configurations connues précitées.

### PRESENTATION DE L'INVENTION

La présente invention concerne un procédé de fabrication d'un ensemble stabilisateur pour véhicule selon la revendication 1. De manière plus générale, le présent exposé présente un ensemble stabilisateur, non revendiqué, pour barre stabilisatrice de véhicule, comprenant une barre stabilisatrice, au moins un palier incluant une bride, en matériau plastique, comportant au moins une portion de retenue et une gorge incluant une portion de berceau, dans lequel la barre stabilisatrice traverse la gorge de la bride et est solidaire de la bride par l'intermédiaire d'une couche élastomère vulcanisée.

Dans le présent exposé, on entend par « couche élastomère » une couche composée à au moins 50%, de préférence au moins 80%, de préférence encore au moins 99%, d'un ou plusieurs élastomères.

Grâce à l'utilisation de matières plastiques, il est possible de réduire drastiquement la masse du palier par rapport au cas d'un palier métallique tout en gardant des propriétés mécaniques équivalentes. Il est ainsi possible d'obtenir un gain en masse d'au moins 40% par rapport à un palier métallique.

En outre, puisque la couche élastomère solidarise la barre stabilisatrice avec la bride, la barre stabilisatrice ne peut glisser par rapport à la bride, ce qui réduit le bruit généré par le palier.

Dans certains modes de réalisation, le palier comprend en outre une cale, en matériau plastique, engagée au moins partiellement dans la gorge de la bride, comportant une portion de berceau, la barre stabilisatrice étant solidaire de la cale par l'intermédiaire de ladite couche élastomère vulcanisée. Toutefois, une telle cale n'est en rien nécessaire et sera de préférence omise.

Dans certains modes de réalisation, la bride est réalisée à base d'un matériau thermoplastique, de préférence à base de polyamide, par exemple à base de PA66. Ce matériau, léger, confère de bonnes propriétés mécaniques. Il offre également une bonne adhérence avec la couche élastomère. La bride peut également être réalisée à base de polytéréphtalate de butylène (PBT), notamment.

Dans le présent exposé, on entend qu'une pièce donnée est réalisée « à base » d'un matériau particulier lorsqu'elle est composée à au moins 60%, de préférence au moins 80%, de préférence encore au moins 99%, du matériau considéré.

De même, dans certains modes de réalisation, la cale est réalisée en matériau thermoplastique, de préférence à base de polyamide, par exemple à base de PA66. La bride peut également être réalisée à base de polytéréphtalate de butylène (PBT), notamment.

Dans certains modes de réalisation, la bride est réalisée dans un matériau renforcé de fibres. Ces fibres permettent de renforcer la tenue mécanique de la bride.

De même, dans certains modes de réalisation, la cale est réalisée dans un matériau renforcé de fibres.

Dans certains modes de réalisation, les fibres sont des fibres de verre.

Dans certains modes de réalisation, les fibres sont des fibres courtes de longueur inférieure à 5 mm, de préférence comprise entre 2,5 et 3,5 mm.

Dans certains modes de réalisation, le diamètre des fibres est compris entre 0,1 et 0,5 mm, de préférence compris entre 0,2 et 0,3 mm.

Dans certains modes de réalisation, les fibres sont ensimées.

Dans certains modes de réalisation, la couche élastomère est réalisée à base de caoutchouc vulcanisé.

Selon l'invention, la couche élastomère fait le tour complet de la barre stabilisatrice. De cette manière, la barre stabilisatrice peut bouger dans toutes les directions au sein de la bride et être rappelé efficacement dans sa position de repos. De préférence, la couche élastomère est continue tout autour de la barre stabilisatrice.

Selon l'invention, la couche élastomère occupe tout le volume de la gorge laissé par la barre stabilisatrice, ou le volume de la gorge laissé par la barre stabilisatrice et la cale lorsqu'une telle cale est présente, de préférence de manière monobloc et continue. Ceci facilite d'une part la fabrication de la couche élastomère et permet d'autre part une meilleure compression de la barre stabilisatrice.

Dans certains modes de réalisation, la gorge de la bride possède une forme en U avec des parois latérales planes s'étendant depuis la portion de berceau, ladite portion de berceau étant hémicylindrique. Cette configuration permet une mise en place aisée de la barre stabilisatrice et une bonne transmission des efforts s'exerçant sur la barre ; elle facilite également l'assemblage avec la cale.

Dans certains modes de réalisation, la gorge de la bride possède une forme en U avec des parois latérales planes s'étendant depuis la portion de berceau, ladite portion de berceau étant hémicylindrique.

Dans certains modes de réalisation, la bride comprend deux pattes de fixation, formant portions de retenue, encadrant la gorge et munies chacune d'un alésage.

Dans certains modes de réalisation, l'alésage d'au moins une patte de retenue est muni d'une douille métallique. Ceci permet de renforcer la zone de l'alésage afin que la fixation du palier sur le châssis du véhicule ne s'affaiblisse pas.

Dans certains modes de réalisation, la cale possède une géométrie complémentaire à la géométrie d'une portion d'extrémité de la gorge de la bride.

Dans certains modes de réalisation, la surface de la cale opposée à sa portion de berceau est prévue pour affleurer une surface d'appui de la bride. Le châssis du véhicule exerce ainsi un effort de compression sur la cale, et donc sur la barre stabilisatrice, lorsque le palier est fixé sur le châssis.

Dans certains modes de réalisation, la bride comprend un organe de guidage configuré pour guider la cale en translation au sein de la gorge. Ceci facilite l'assemblage du palier et assure le bon positionnement de la cale par rapport à la bride, tout en permettant un mouvement relatif de translation entre la cale et la bride.

Dans certains modes de réalisation, la bride possède une rainure de guidage configurée pour recevoir et guider une nervure de guidage de la cale. Toutefois, la configuration inverse est également possible.

Dans certains modes de réalisation, la bride et la cale possèdent des organes d'emboîtage élastique configurés pour solidariser la cale dans la gorge de la bride. Ces organes d'emboîtage élastique permettent de maintenir l'assemblage de la cale et de la bride et de maintenir la compression exercée par ces éléments sur la barre stabilisatrice.

Dans certains modes de réalisation, la bride possède des pattes élastiques configurées pour s'engager et être retenues derrière des épaulements de la bride. Toutefois, la configuration inverse est également possible.

Dans certains modes de réalisation, la bride possède une structure alvéolaire. Une telle structure alvéolaire permet de réduire la quantité de matière utilisée et ainsi réduire encore la masse du palier.

Dans certains modes de réalisation, les alvéoles de la bride sont parallèles et s'étendent selon une direction principale de la bride orthogonale à la direction d'extension de la barre stabilisatrice. De cette manière, les parois latérales des alvéoles s'étendent dans la direction principale de la bride, c'est-à-dire la direction de fixation du palier et de compression de la barre stabilisatrice : on obtient ainsi une meilleure répartition des contraintes.

Dans certains modes de réalisation, au moins certaines parois séparant les alvéoles de la bride s'étendent dans des plans sensiblement radiaux et/ou tangentiels par rapport à l'axe principal de la bride. Cette orientation permet d'assurer une bonne tenue mécanique de la bride vis-à-vis des efforts de compression.

Dans certains modes de réalisation, au moins certaines parois séparant les alvéoles de la bride s'étendent dans des plans sensiblement radiaux et/ou tangentiels par rapport à l'axe d'un alésage de la bride. Cette orientation permet d'assurer une bonne tenue mécanique de la bride au niveau de cet alésage, en particulier vis-à-vis des efforts de fixation.

Dans certains modes de réalisation, chaque paroi séparant deux alvéoles de la bride s'étend dans un plan sensiblement radial ou un plan sensiblement tangentiel par rapport à l'axe principal de la bride ou à l'axe d'un alésage de la bride.

Dans le cas d'un matériau renforcé de fibres, il convient également de noter que ces alvéoles permettent d'orienter les fibres le long des parois séparant les alvéoles et donc de renforcer la bride dans ces mêmes plans structuraux.

Dans certains modes de réalisation, des congés sont prévus entre chaque paroi latérale des alvéoles de la bride. Ces congés facilitent l'écoulement du fluide dans le moule au cours de l'injection. Dans le cas d'un matériau renforcé de fibres, ils favorisent également le passage des fibres et leur orientation le long des parois.

De même, dans certains modes de réalisation, la cale possède une structure alvéolaire.

Dans certains modes de réalisation, les alvéoles de la cale sont parallèles et s'étendent selon une direction principale de la cale orthogonale à la direction d'extension de la barre stabilisatrice. De cette manière, les parois latérales des alvéoles s'étendent dans la direction principale de la cale, c'est-à-dire la direction d'insertion de la cale dans la bride et de compression de la barre stabilisatrice : la cale conserve ainsi une bonne tenue mécanique malgré la présence des alvéoles.

Dans certains modes de réalisation, au moins certaines parois, et de préférence toutes les parois, séparant les alvéoles de la cale s'étendent dans des plans sensiblement radiaux et/ou tangentiels par rapport à l'axe principal de la cale.

Dans certains modes de réalisation, des congés sont prévus entre chaque paroi latérale des alvéoles de la cale.

Dans certains modes de réalisation, la barre stabilisatrice est une barre pleine ou un tube creux.

Dans certains modes de réalisation, la barre stabilisatrice est peinte.

Dans d'autres modes de réalisation, la barre stabilisatrice est dépourvue de peinture.

Dans certains modes de réalisation, la tension superficielle de la barre stabilisatrice au niveau du palier est supérieure à 60 mN/m, de préférence supérieure à 70 mN/m.

Le présent exposé concerne un procédé de fabrication d'un ensemble stabilisateur pour véhicule selon la revendication 1.

Dans certains modes de réalisation, la bride est réalisée par moulage et injection.

Dans certains modes de réalisation, la barre stabilisatrice subit un flammage avant l'injection de l'élastomère, ce flammage ayant lieu au moins dans la zone prévue pour cette injection. Une telle étape est tout particulièrement adaptée lorsque la barre stabilisatrice est peinte. En effet, ce flammage permet d'augmenter la tension superficielle de la barre stabilisatrice de manière à assurer une meilleure adhésion de la couche élastomère sur la barre stabilisatrice.

Dans certains modes de réalisation, ce flammage est réalisé sans que la température de surface de la barre stabilisatrice ne dépasse 100°C.

Dans certains modes de réalisation, la durée de ce flammage est comprise entre 2 et 10 s, de préférence entre 4 et 8s.

Dans certains modes de réalisation, la barre stabilisatrice est entraînée en rotation autour de son axe principal au cours de cette étape de flammage.

Dans certains modes de réalisation, l'étape d'injection de l'élastomère est réalisée moins de 4 heures après l'étape de flammage.

Les caractéristiques et avantages précités, ainsi que d'autres, apparaîtront à la lecture de la description détaillée qui suit, d'exemples de réalisation de l'ensemble stabilisateur et du procédé proposés. Cette description détaillée fait référence aux dessins annexés.

### BREVE DESCRIPTION DES DESSINS

Les dessins annexés sont schématiques et visent avant tout à illustrer les principes de l'invention.

Sur ces dessins, d'une figure (FIG) à l'autre, des éléments (ou parties d'élément) identiques sont repérés par les mêmes signes de référence. En outre, des éléments (ou parties d'élément) appartenant à des exemples de réalisation différents mais ayant une fonction analogue sont repérés sur les figures par des références numériques incrémentées de 100, 200, etc.
La FIG 1 est une vue en perspective d'un ensemble stabilisateur.
La FIG 2 est une vue en perspective d'un exemple de palier.
La FIG 3 est une vue en perspective de la bride de la FIG 2.
La FIG 4 est une vue en coupe du palier de la FIG 2.
La FIG 5 est une vue de dessus du palier de la FIG 2.
La FIG 6 est une vue de dessous du palier de la FIG 2.

### DESCRIPTION DETAILLEE D'EXEMPLE(S) DE REALISATION

Afin de rendre plus concrète l'invention, un exemple d'ensemble stabilisateur est décrit en détail ci-après, en référence aux dessins annexés. Il est rappelé que l'invention ne se limite pas à cet exemple.

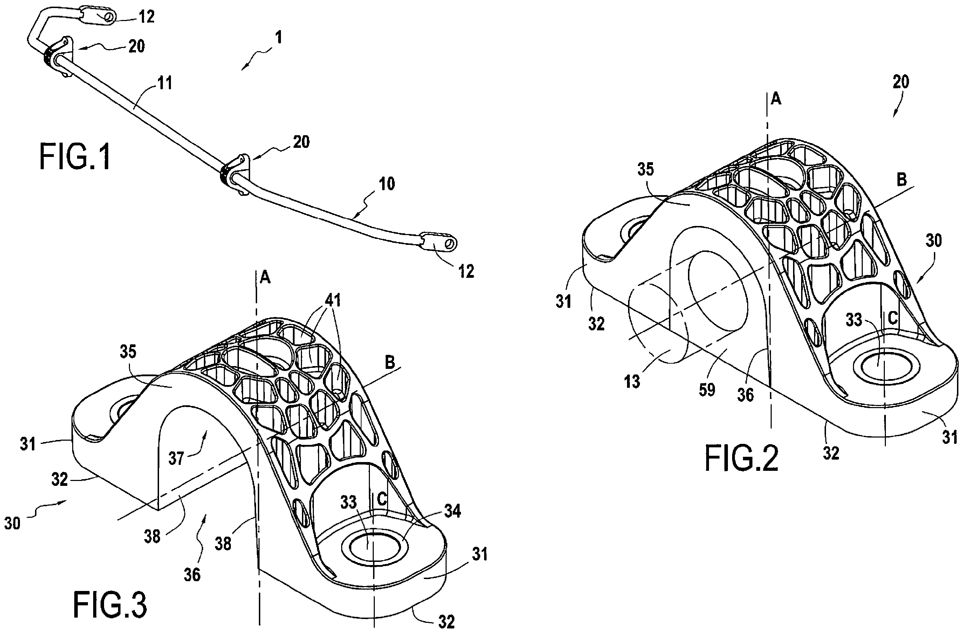

La FIG 1 représente un ensemble stabilisateur 1 pour véhicule comprenant une barre stabilisatrice 10, pleine ou creuse, peinte ou non, dont la partie centrale 11 est équipée de deux paliers 20. Les paliers 20 sont destinés à être fixés sur le châssis du véhicule tandis que les extrémités 12 de la barre stabilisatrice 10 sont destinées à être fixées sur des parties du véhicule solidaires de chaque roue d'un même essieu, en particulier le triangle de suspension de chaque roue de l'essieu.

Les FIG 2 à 6 représentent un tel palier 20 monté sur un tronçon 13 de la barre stabilisatrice 10. Le palier 20 comprend une bride 30 et une couche élastomère 59.

La bride 30 possède une forme générale de U et comprend deux pattes de retenue 31 reliées par un arceau 35 de manière à former une gorge 36. La bride 30 est symétrique par rapport à son axe principal A qui constitue plus largement l'axe principal du palier 20.

Chaque patte de retenue 31 s'étend latéralement depuis la base de l'arceau 35, perpendiculairement à l'axe principal A. Chaque patte de retenue 31 possède une surface d'appui 32, formant la surface d'appui de la bride 30 et plus largement du palier 20, et un alésage traversant 33, d'axe C perpendiculaire à la surface d'appui 32 et donc parallèle à l'axe principal A. Chaque alésage 33 est muni d'une douille métallique 34.

La gorge 36, en forme générale de U, est également symétrique par rapport à l'axe principal A. Elle possède une portion de fond hémicylindrique, formant portion de berceau 37, flanquée de deux parois latérales planes 38 débouchant sur la surface d'appui 32 de la bride 30. La portion de berceau 37 hémicylindrique est dirigée selon un axe B orthogonal à l'axe A et correspondant à la direction d'extension de la barre stabilisatrice 10 lorsque le palier 20 est monté.

La bride 30 est réalisée par moulage et injection en polyamide 66 renforcé de fibres de verre. Ces fibres de verre sont des fibres courtes, dont la longueur est comprise entre 3 et 3,2 mm pour un diamètre compris entre 0,2 et 0,25 mm. Ces fibres sont traitées par ensimage pour permettre un bon mouillage des fibres puis mélangées à la matrice polyamide à hauteur de 30 à 50% en masse du matériau final. Les douilles métalliques 34 sont pour leur part insérées dans le moule de la bride 30 avant l'injection du matériau thermoplastique ; des reliefs annulaires 34a permettent de bloquer leurs positions au sein de la bride 30 une fois le matériau solidifié.

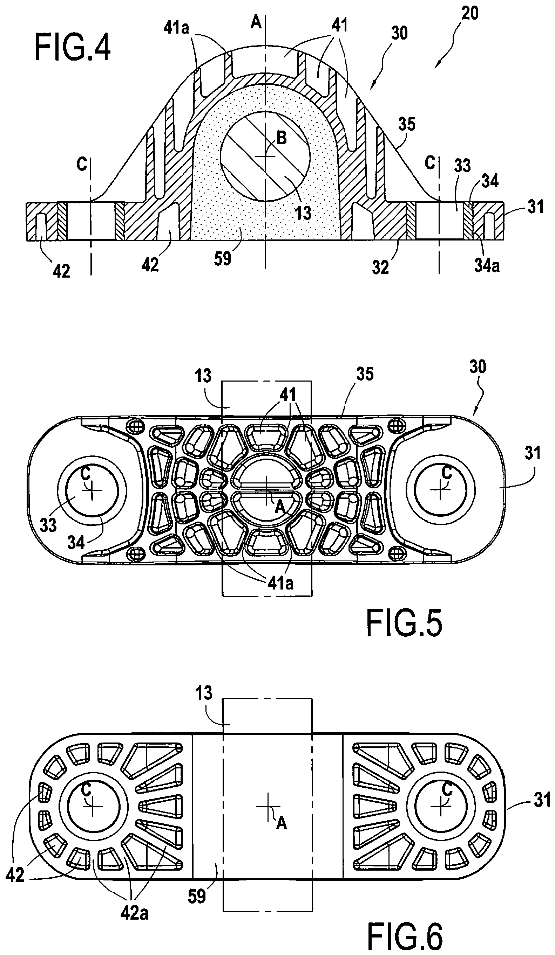

Comme cela est mieux visible sur les FIG 5 et 6, la bride 30 comporte de nombreuses alvéoles cylindriques 41, 42 s'étendant parallèlement à l'axe principal A de la bride 30. L'arceau 35 comporte un premier ensemble d'alvéoles 41 organisées de manière symétrique par rapport à l'axe principal A. En particulier, les parois 41a séparant ces alvéoles 41 s'étendent soit radialement par rapport à l'axe principal A, soit le long de courbes centrées sur l'axe principal A et de préférence sensiblement circonférentielles par rapport à l'axe principal A. Ces alvéoles 41 sont ouvertes sur la surface extérieure de l'arceau 35 et fermées au niveau de la gorge 36. En outre, les coins de ces alvéoles 41 sont arrondis, un congé étant prévu entre chaque paroi latérale des alvéoles 41, de manière à faciliter le passage et l'orientation des fibres de renfort dans la bride 30 au cours de l'injection.

Chaque patte de retenue 31 comporte également un deuxième ensemble d'alvéoles 42 organisées de manière symétrique par rapport à l'axe C de l'alésage 33 de la patte de retenue 31 considérée. En particulier, les parois 42a séparant ces alvéoles 42 s'étendent radialement par rapport à l'axe C de l'alésage 33. Ces alvéoles 42 sont ouvertes sur la surface d'appui 32 de la patte de retenue 31 et fermée au niveau de sa surface opposée. Ici également, les coins de ces alvéoles 42 sont arrondis, un congé étant prévu entre chaque paroi latérale des alvéoles 42.

L'ensemble stabilisateur 1 est alors assemblé de la manière suivante. Une fois la bride 30 fabriquée par moulage et injection, la bride 30 est passée autour de la barre stabilisatrice 10. En particulier, on note sur les FIG. 2 et 4 que le tronçon 13 de la barre stabilisatrice 10 est reçu tout entier dans la gorge 36 de la bride 10, c'est-à-dire que la gorge 36 entoure complètement la barre stabilisatrice 10.

La barre stabilisatrice 10 peut avoir subi un traitement de préparation. En particulier, la barre stabilisatrice 10 peut avoir subi une étape de flammage durant laquelle la ou les zones devant recevoir le palier 20 sont chauffées localement pendant environ 6 s à l'aide d'une flamme de chalumeau, par exemple un chalumeau à gaz, à propane, butane ou acétylène pour ne citer que ces exemples. Durant cette étape de flammage, la barre est tournée autour de son axe, par exemple à la main.

Cet ensemble est alors placé dans un moule de telle sorte que la barre stabilisatrice 10 s'étende au sein de la bride 30 selon l'axe B en laissant un jeu continu et constant entre la barre stabilisatrice 10 et la portion de berceau 37 de la bride 30.

Du caoutchouc est alors injecté dans le moule de manière à remplir l'espace de la gorge 63 laissé tout autour de la barre stabilisatrice 10, formant ainsi la couche élastomère 59. Ainsi, comme cela est visible sur la FIG. 4, on comprend que la couche élastomère 59 entoure complètement, de manière monobloc et continue, c'est-à-dire en une seule partie sans césure, le tronçon 13 de la barre stabilisatrice 10. La couche élastomère 59 ainsi obtenue est ensuite vulcanisée de manière à solidariser la barre stabilisatrice 10 au sein de la bride 30 : le palier 20 est ainsi assemblé et la même opération peut être menée pour le deuxième palier 20.

L'ensemble stabilisateur 1 ainsi assemblé peut alors être monté sur le châssis du véhicule en plaquant la surface d'appui 32 du palier 10 sur le châssis et en vissant le palier 20 sur le châssis à l'aide de deux vis passant par les alésages 33 des pattes de retenue 32.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

## Revendications

1. Procédé de fabrication d'un ensemble stabilisateur pour véhicule, comprenant les étapes suivantes :
fourniture d'une barre stabilisatrice (10) ;
fourniture d'une bride (30), en matériau plastique, comportant au moins une portion de retenue (31) et une gorge (36) incluant une portion de berceau (37) ;
mise en place de la barre stabilisatrice (10) dans la gorge (36) de la bride (30) ;
injection d'un élastomère dans la gorge (36) de la bride (30), à l'interface avec la barre stabilisatrice (10), de manière à remplir l'espace de la gorge (63) laissé tout autour de la barre stabilisatrice 10, et obtention d'une couche élastomère (59) au niveau de cette interface, la couche élastomère (59) faisant le tour complet de la barre stabilisatrice (10) ; et
vulcanisation de ladite couche élastomère (59).

2. Procédé de fabrication selon la revendication 1, dans lequel la bride (30) est réalisée en matériau thermoplastique, de préférence à base de polyamide.

3. Procédé de fabrication selon la revendication 1 ou 2, dans lequel la bride (30) est réalisée dans un matériau renforcé de fibres.

4. Procédé de fabrication selon l'une quelconque des revendications 1 à 3, dans lequel la couche élastomère (59) est réalisée à base de caoutchouc vulcanisé.

5. Procédé de fabrication selon l'une quelconque des revendications 1 à 4, dans lequel la bride (30) possède une structure alvéolaire (41, 42).

6. Procédé de fabrication selon la revendication 5, dans lequel les alvéoles (41, 42) de la bride (30) sont parallèles et s'étendent selon une direction principale (A) de la bride (30) orthogonale à la direction d'extension (B) de la barre stabilisatrice (10).

7. Procédé de fabrication selon la revendication 6, dans lequel au moins certaines parois (41a, 42a) séparant les alvéoles (41, 42) de la bride (40) s'étendent dans des plans sensiblement radiaux et/ou tangentiels par rapport à l'axe principal (A) de la bride (30).

## Patentansprüche

1. Verfahren zur Herstellung einer Stabilisatoranordnung für ein Fahrzeug, umfassend die folgenden Schritte:
Bereitstellen einer Stabilisatorstange (10),
Bereitstellen eines Flansches (30) aus Kunststoffmaterial, umfassend wenigstens einen Halteabschnitt (31) und eine Hohlkehle (36), die einen Lagerungsabschnitt (37) enthält,
Einsetzen der Stabilisatorstange (10) in die Hohlkehle (36) des Flansches (30),
Einspritzen eines Elastomers in die Hohlkehle (36) des Flansches (30) an der Schnittstelle mit der Stabilisatorstange (10), um den rund um die Stabilisatorstange (10) herum verbliebenen Raum der Hohlkehle (36) zu füllen, und Erhalten einer Elastomerschicht (59) im Bereich dieser Schnittstelle, wobei die Elastomerschicht (59) die Stabilisatorstange (10) vollständig umgibt, und
Vulkanisieren der Elastomerschicht (59).

2. Herstellungsverfahren nach Anspruch 1, bei dem der Flansch (30) aus thermoplastischem Material, vorzugsweise auf Basis von Polyamid gefertigt ist.

3. Herstellungsverfahren nach Anspruch 1 oder 2, bei dem der Flansch (30) aus einem faserverstärkten Material gefertigt ist.

4. Herstellungsverfahren nach einem der Ansprüche 1 bis 3, bei dem die Elastomerschicht (59) auf Basis von vulkanisiertem Gummi hergestellt ist.

5. Herstellungsverfahren nach einem der Ansprüche 1 bis 4, bei dem der Flansch (30) eine Wabenstruktur (41, 42) aufweist.

6. Herstellungsverfahren nach Anspruch 5, bei dem die Zellen (41, 42) des Flansches (30) parallel sind und entlang einer Hauptrichtung (A) des Flansches (30) orthogonal zur Erstreckungsrichtung (B) des Stabilisators (10) verlaufen.

7. Herstellungsverfahren nach Anspruch 6, bei dem wenigstens bestimmte Wände (41a, 42a), welche die Zellen (41, 42) des Flansches (30) trennen, sich in im Wesentlichen radialen und/oder tangentialen Ebenen in Bezug auf die Hauptachse (A) des Flansches (30) erstrecken.

## Claims

1. A method for manufacturing a stabilizer unit for a vehicle, comprising the following steps:
providing a stabilizer bar (10);
providing a flange (30), made of plastic material, including at least one retaining portion (31) and one groove (36) including a cradle portion (37);
placing the stabilizer bar (10) in the groove (36) of the flange (30);
injecting an elastomer into the groove (36) of the flange (30), at the interface with the stabilizer bar (10), so as to fill the space of the groove (63) left all around the stabilizer bar (10), and obtaining an elastomer layer (59) at this interface, the elastomer layer (59) making the complete turn of the stabilizer bar (10); and
vulcanizing said elastomer layer (59).

2. The manufacturing method according to claim 1, wherein the flange (30) is made of thermoplastic material, preferably polyamide-based thermoplastic material.

3. The manufacturing method according to claim 1 or 2, wherein the flange (30) is made in a fiber-reinforced material.

4. The manufacturing method according to any one of claims 1 to 3, wherein the elastomer layer (59) is made from vulcanized rubber.

5. The manufacturing method according to any one of claims 1 to 4, wherein the flange (30) has a cellular structure (41, 42).

6. The manufacturing method according to claim 5, wherein the cells (41, 42) of the flange (30) are parallel and extend along a main direction (A) of the flange (30) orthogonal to the direction of extension (B) of the stabilizer bar (10).

7. The manufacturing method according to claim 6, wherein at least some walls (41a, 42a) separating the cells (41, 42) of the flange (40) extend in substantially radial and/or tangential planes with respect to the main axis (A) of the flange (30).
